# EUROPEAN PATENT APPLICATION

(11) **EP 2 704 437 A1**
(43) Date of publication of application: **05.03.2014**
(21) Application number: 12777514.6
(22) Date of filing: 02.04.2012
(51) Int. Cl.: H04N 13/04, G02B 27/22

(54) **IMAGE PROCESSING DEVICE, IMAGE PROCESSING METHOD, DISPLAY SYSTEM, VIDEO GENERATION DEVICE, AND PLAYBACK DEVICE**

(30) Priority: 26.04.2011 JP 2011097916
(71) Applicant: Sony Corporation, Tokyo 108-0075 (JP)
(72) Inventor: NAKAGAWA, Makoto, Tokyo 108-0075 (JP); NAKAHATA, Yuji, Tokyo 108-0075 (JP)
(74) Representative: Ealey, Douglas Ralph
(86) International application number: PCT/JP2012/058839
(87) International publication number: WO 2012/147454

(57) **Abstract**

A plurality of parallax images which are time-divisionally displayed are processed so that correct parallax can be displayed even during motion picture display.

When a plurality of image streams of input signals to the video signal processing unit 120 are captured or generated with the same timing, interpolation processing for generating an interpolated image in terms of time is performed on at least one of the plurality of image streams, and the change of the apparent parallax is suppressed. More specifically, interpolation processing in terms of time is performed, so that a time difference of a time at which interpolation images of a plurality of image streams are generated is the same as a time difference of operation for separating the corresponding parallax images.

## Description

### TECHNICAL FIELD

A technique disclosed in this specification relates to an image processing apparatus and an image processing method for processing time-divisionally displayed a plurality of parallax images, and a display system, a video generation apparatus, and a reproduction apparatus for displaying a plurality of parallax images, and more particularly, to an image processing apparatus and an image processing method for processing time-divisionally displayed a plurality of parallax images so that parallax can be displayed correctly even during motion picture display, and a display system, a video generation apparatus, and a reproduction apparatus for correctly displaying parallax of a plurality of parallax images even during motion picture display.

### BACKGROUND ART

A stereoscopic image that appears to be three-dimensional manner to an observer can be presented by displaying images with parallax for the right and left eyes. The stereoscopic image technique is expected to be applied to various fields such as television broadcasting, movie, remote communication, and remote medical care.

For example, the time-divisionally stereoscopic image display system includes a display apparatus for alternately displaying left-eye images and right-eye images having parallax with an extremely short cycle on a screen, and a mechanism for separating the left-eye images and the right-eye images in synchronization with a display cycle of the left-eye images and the right-eye images. When an observer independently sees a left-eye image with his/her left eye and a right-eye image with his/her right eye, then they are fused in the brain of the observer, and the observer recognizes them in a stereoscopic manner.

In a case of a time-divisionally stereoscopic image display system of shutter glasses-type, shutter glasses worn by an observer include shutter mechanisms including liquid crystal lenses respectively provided for the left eye unit and the right eye unit, and while a left-eye image is displayed, the shutter glasses cause the left eye unit of the shutter glasses to pass light and causes the right eye unit to shield light. While a right-eye image is displayed, the shutter glasses cause the right eye unit of the shutter glasses to pass light and causes the left eye unit to shield light (for example, see Patent Documents 1 to 3) . More specifically, the display apparatus time-divisionally displays the left-eye images and the right-eye images, and the shutter glasses use the shutter mechanisms to select images in synchronization with switching of display of the display apparatus, and therefore, the observer can see the left-eye image and the right-eye image in such a manner than they are separated from each other.

In a case of a time-divisionally stereoscopic image display system of active retarder-type, the display is provided with a mechanism for controlling polarization in a time-divisional manner. The polarization control mechanism includes a liquid crystal shutter and a phase difference film or a phase difference plate provided on the display screen, and changes the polarization direction of each of the right and the left in synchronization with the display cycle of the left-eye images and the right-eye images. Then, the observer puts on the polarization glasses supporting the polarization direction of each of the right and the left, so that the observer can see the left-eye image and the right-eye image in a separate manner.

The time-divisionally stereoscopic image display system is not limited to glasses-type, and, for example, a system having a shutter at the display for preventing reduction of the resolution even with naked eye-type has been devised.

However, as described above, in general, there is a problem in that a display apparatus time-divisionally displaying left-eye images and right-eye images may change the amount of parallax during motion picture display. This problem will be hereinafter considered.

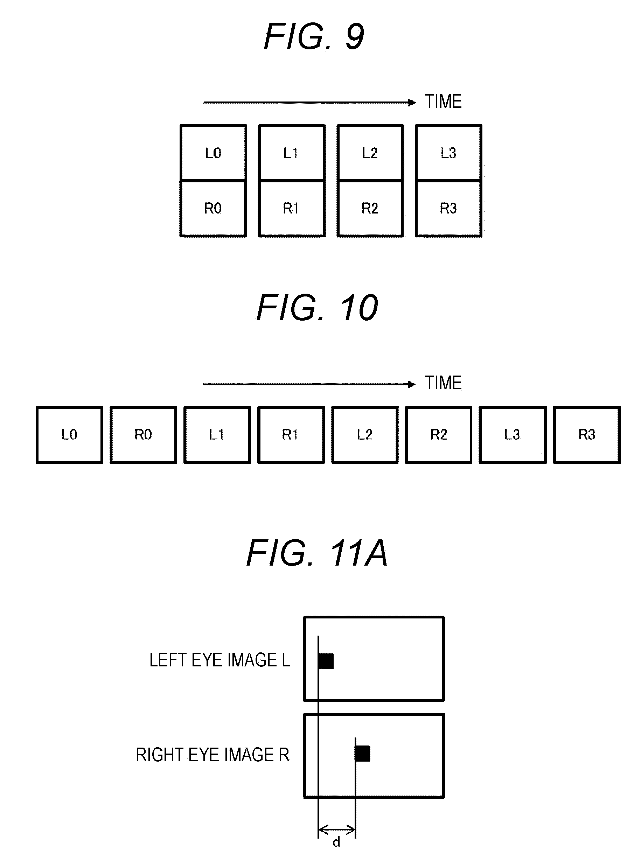

In many cases, stereoscopic images which are input into a stereoscopic image display apparatus are such that a left-eye image and a right-eye image are taken or generated at the same time. As illustrated in Fig. 9, suppose that the display apparatus receives signal L0R0-L1R1-L2R2-... of the left-eye images and the right-eye images. In this case, L denotes a left-eye image, and R denotes a right-eye image, and a number attached to L and R is a sequence number. The sequence number corresponds to a time when an image is captured or generated, and is the order of display in time axis.

When the display apparatus displays left-eye images and right-eye images according to a time-divisionally method, the above input signals are sorted in the following order: the left-eye image and then the right-eye image at each time, and more specifically, the input signals are sorted and displayed into the order L0-R0-L1-R1-L2-R2-... as illustrated in Fig. 10. For example, the right and left liquid crystal lenses of the shutter glasses are operated to be opened and closed in synchronization with the display cycle of the left-eye image and the right-eye image, whereby the observer can see the left-eye image with his/her left eye and the right-eye image with his/her right eye in a separated manner.

However, the frames L0R0, L1R1, ... which are originally to be seen with the right and left eyes at the same time are seen, strictly speaking, in such a manner that R0 is seen with 0.5 frame delay with respect to L0, and R1 is seen with 0.5 frame delay with respect to L1. As a result, depending on the direction in which the parallax object moves and the speed at which it moves, apparent parallax may change.

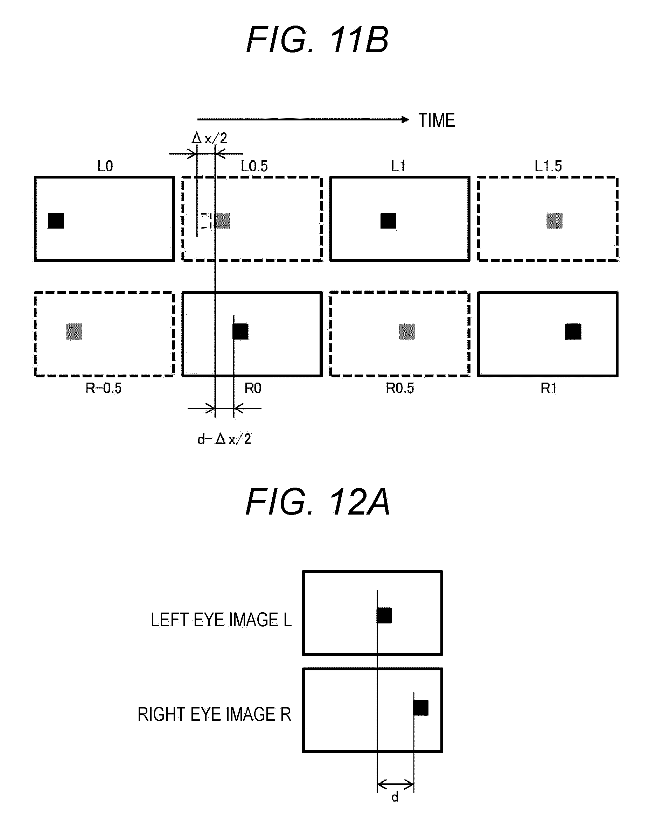

For example, as illustrated in Fig. 11A, suppose that when the left-eye image stream L is displayed before the right-eye image stream R (L0-R0-L1-R1-...), a motion picture in which an object with a parallax of d pixels between the left-eye image L and the right-eye image R moves with a speed of Δx pixels per frame cycle from the left to the right of the screen is displayed in three-dimensional manner in accordance with the above time-divisionally method. This will be hereinafter explained. Fig. 11B illustrates this motion picture displayed upon sorting the motion picture into the order LO-RO-L1-R1-L2-R2-... as illustrated in Fig. 10. As described above, R0 is seen with a delay of 0.5 frame with respect to L0, and R1 is seen with a delay of 0.5 frame with respect to L1. Between L0 and L1, the object moves by Δx/2 pixels to the right. Therefore, at a point in time when R0 is displayed with the delay of 0.5 frame with respect to L0, the observer thinks that the object in a left-eye image frame L0.5 moves by Δx/2 to the right as illustrated by gray color. On the other hand, the object in the right-eye image R0 displayed with the delay of 0.5 frame with respect to L0 is at the right side by d pixels as compared with L0, but the parallax with respect to the left-eye image L0.5, which is imagined in the brain of the observer, is (d-Δx/2) pixel. More specifically, the parallax is reduced by Δx/2 pixel. As a result, the observer feels that the object is closer to the observer than actually it is.

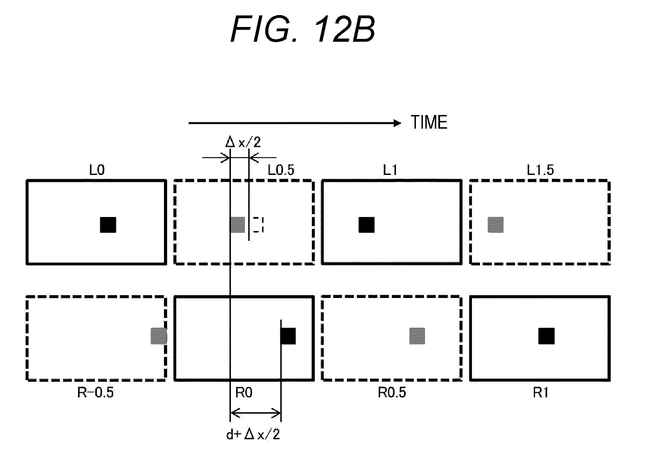

As illustrated in Fig. 12A, suppose that when the left-eye image stream L is displayed before the right-eye image stream R, a motion picture in which an object with a parallax of d pixels between the left-eye image L and the right-eye image R moves with a speed of Δx pixels per frame cycle from the right to the left of the screen is displayed in three-dimensional manner in accordance with the above time-divisionally method. This will be hereinafter explained. Fig. 12 illustrates this motion picture displayed upon sorting the motion picture into the order L0-R0-L1-R1-L2-R2-... as illustrated in Fig. 10. As described above, R0 is seen with a delay of 0.5 frame with respect to L0, and R1 is seen with a delay of 0.5 frame with respect to L1. Between L0 and L1, the object moves by Δx/2 pixels to the left. Therefore, at a point in time when R0 is displayed with the delay of 0.5 frame with respect to L0, the observer thinks that the object in a left-eye image frame L0.5 moves by Δx/2 to the left as illustrated by gray color. On the other hand, the object in the right-eye image R0 displayed with the delay of 0.5 frame with respect to L0 is at the right side by d pixels as compared with L0, but the parallax with respect to the left-eye image, which is imagined in the brain of the observer, is (d+Δx/2) pixel. More specifically, the parallax is increased by Δx/2 pixel. As a result, the observer feels that the object is farther from the observer than actually it is.

The above is an example where the left-eye video and the right-eye image are displayed in a time-divisional manner. When a plurality of images are displayed for a user 1 and user 2 (Dual View), both of the users are originally expected to view the images at the same time, but because of similar phenomenon, one of the users would see an image with a delay. This is not preferable when a user plays a game with a high degree of actions.

### CITATION LIST

### PATENT DOCUMENT

Patent Document 1: Japanese Patent Application Laid-Open No. 9-138384
Patent Document 2: Japanese Patent Application Laid-Open No. 2000-36969
Patent Document 3: Japanese Patent Application Laid-Open No. 2003-45343

### SUMMARY OF THE INVENTION

### PROBLEMS TO BE SOLVED BY THE INVENTION

An object of a technique disclosed in this specification is to provide an image processing apparatus and an image processing method which are superior and capable of preferably processing a plurality of parallax images displayed in a time-divisional manner, and a display system, a video generation apparatus, and a reproduction apparatus which are superior and capable of preferably displaying a plurality of parallax images.

Another object of a technique disclosed in this specification is to provide an image processing apparatus and an image processing method which are superior and capable of processing time-divisionally displayed a plurality of parallax images so that parallax can be displayed correctly even during motion picture display, and a display system, a video generation apparatus, and a reproduction apparatus which are superior and capable of correctly displaying parallax of a plurality of parallax images even during motion picture display.

### SOLUTIONS TO PROBLEMS

The present application is made in view of the above problem, and a technique described in claim 1 is an image processing apparatus including an interpolation processing unit that generates an interpolated image in terms of time for at least one image stream of a plurality of image streams; and
an output unit that outputs upon time-divisionally switching, into the order of image streams and the order of time, each image stream not subjected to the interpolation processing by the interpolation processing unit and each image stream having been subjected to the interpolation processing by the interpolation processing unit from among the plurality of image streams.

A technique described in claim 2 of the present application is an image processing method including an interpolation processing step of generating an interpolated image in terms of time for at least one image stream of a plurality of image streams, and an output step of outputting upon time-divisionally switching, into the order of image streams and the order of time, each image stream not subjected to the interpolation processing in the interpolation processing step and each image stream having been subjected to the interpolation processing in the interpolation processing step from among the plurality of image streams.

A technique described in claim 3 of the present application is a display system including an interpolation processing unit that generates an interpolated image in terms of time for at least one image stream of a plurality of image streams of input signals, and a display unit that time-divisionally switches and outputs, into the order of image streams and the order of time, each image stream not subjected to the interpolation processing by the interpolation processing unit and each image stream having been subjected to the interpolation processing by the interpolation processing unit from among the plurality of image streams, and a shutter control unit that controls opening/closing operation of a plurality of shutter mechanisms respectively corresponding to the image streams in synchronization with switching of display of the display unit.

According to a technique described in claim 4 of the present application, the interpolation processing unit of the display system according to claim 3 inputs a plurality of image streams captured or generated with a same timing, and generates an interpolated image in terms of time so that a time difference of a time for generating the interpolation image of the image stream is the same as a time difference of opening/closing operation of the plurality of shutter mechanisms.

According to a technique described in claim 5 of the present application, the display system according to claim 3 is configured such that a determination as to for which time the interpolation processing unit generates an interpolation image for which of a plurality of image streams is made on the basis of information attached to the input signal or on the basis of selection made by a user.

According to a technique described in claim 6 of the present application, the plurality of image streams which are input signals to the display system according to claim 3 are a left-eye image stream and a right-eye image stream having parallax with respect to each other.

According to a technique described in claim 7 of the present application, the plurality of shutter mechanisms are shutter glasses which have a left-eye shutter and a right-eye shutter and which is worn by an observer, in the display system according to claim 6.

According to a technique described in claim 8 of the present application, the plurality of shutter mechanisms are liquid crystal shutters which are provided on a display screen of the display unit and which respectively correspond to parallax image, in the display system according to claim 6.

According to a technique described in claim 9 of the present application, the plurality of shutter mechanisms include a liquid crystal shutter and a phase difference film or a phase difference plate provided on a display screen of the display unit, and polarization glasses worn by an observer, in the display system according to claim 6.

A technique described in claim 10 of the present application is a video generation apparatus for generating a plurality of image streams to generate an interpolated image in terms of time for at least one of the image streams.

According to a technique described in claim 11 of the present application, the video generation apparatus according to claim 10 is configured such that a display apparatus for time-divisionally displaying a plurality of image streams is connected, and a method of the display apparatus is obtained.

According to a technique described in claim 12 of the present application, the video generation apparatus according to claim 11 is configured such that an interpolated image in terms of time for at least one of a plurality of image streams is generated so as to attain the same time difference as a time difference of operation for separating a plurality of image streams which is performed by the display apparatus.

A technique described in claim 13 of the present application is a reproduction apparatus for reproducing a plurality of image streams from a recording medium to generate an interpolated image in terms of time for at least one of the image streams.

According to a technique described in claim 14 of the present application, the reproduction apparatus according to claim 13 is configured such that a display apparatus for time-divisionally displaying a plurality of image streams is connected, and a method of the display apparatus is obtained.

According to a technique described in claim 15 of the present application, the reproduction apparatus according to claim 14 is configured such that an interpolated image in terms of time for at least one of a plurality of image streams is generated so as to attain the same time difference as a time difference of operation for separating a plurality of image streams which is performed by the display apparatus.

### EFFECTS OF THE INVENTION

According to a technique disclosed in this specification, an image processing apparatus and an image processing method which are superior and capable of preferably processing a plurality of parallax images displayed in a time-divisional manner, and a display system, a video generation apparatus, and a reproduction apparatus which are superior and capable of preferably displaying a plurality of parallax images can be provided.

According to a technique disclosed in this specification, an image processing apparatus and an image processing method which are superior and capable of processing time-divisionally displayed a plurality of parallax images so that parallax can be displayed correctly even during motion picture display, and a display system, a video generation apparatus, and a reproduction apparatus which are superior and capable of correctly displaying parallax of a plurality of parallax images even during motion picture display can be provided.

Other objects, features, and advantages of the technique disclosed in this specification will become apparent from detailed description based on attached drawings and embodiments explained below.

### BRIEF DESCRIPTION OF DRAWINGS

Fig. 1 is a figure illustrating a configuration example of a time-divisional display system including a display apparatus 100 and shutter glasses 130 displaying a plurality of parallax images in a time-divisional manner.
Fig. 2 is a timing chart illustrating an original parallax image before generation of an interpolated image in terms of time and opening/closing operation of a left-eye shutter lens 308 and a right-eye shutter lens 309.
Fig. 3 is a figure illustrating generation of an interpolated image in terms of time for a right-eye image among a left-eye image and the right-eye image captured or generated with the same timing.
Fig. 4A is a figure illustrating an object with a parallax of d pixels between a left-eye image L and a right-eye image R.
Fig. 4B is a figure illustrating an example of generation of an interpolated image in terms of time for a right-eye image among a left-eye image and the right-eye image captured or generated with the same timing showing the object as illustrated in Fig. 4A moving from the left to the right of a screen.
Fig. 5A is a figure illustrating an object with a parallax of d pixels between a left-eye image L and a right-eye image R.
Fig. 5B is a figure illustrating an example of generation of an interpolated image in terms of time for a right-eye image among a left-eye image and the right-eye image captured or generated with the same timing showing the object as illustrated in Fig. 45 moving from the right to the left of a screen.
Fig. 6 is a figure illustrating a functional block diagram in a video signal processing unit 120 for generating an interpolated image in terms of time for a right-eye image as illustrated in Figs. 4B and 5B.
Fig. 7 is a figure illustrating generation of interpolated image in terms of time for both of a right-eye image and a left-eye image among the left-eye image and the right-eye image captured or generated with the same timing.
Fig. 8 is a figure illustrating a functional block diagram in a video signal processing unit 120 for generating an interpolated image in terms of time for each of the left-eye image and the right-eye image.
Fig. 9 is a figure illustrating input of signals LORO-L1R1-L2R2-... of the left-eye images and the right-eye images.
Fig. 10 is a figure illustrating displaying of input signals L0R0-L1R1-L2R2-... upon sorting them into L0-R0-L1-R1-L2-R2-....
Fig. 11A is a figure illustrating an object with a parallax of d pixels between a left-eye image L and a right-eye image R.
Fig. 11B is a figure illustrating an example of time-divisionally display of a left-eye image and a right-eye image captured or generated with the same timing showing the object as illustrated in Fig. 11A moving from the left to the right of a screen.
Fig. 12A is a figure illustrating an object with a parallax of d pixels between a left-eye image L and a right-eye image R.
Fig. 12B is a figure illustrating an example of time-divisionally display of a left-eye image and a right-eye image captured or generated with the same timing showing the object as illustrated in Fig. 12A moving from the right to the left of a screen.

### MODE FOR CARRYING OUT THE INVENTION

An embodiment of a technique disclosed in this specification will be explained in detail with reference to drawings.

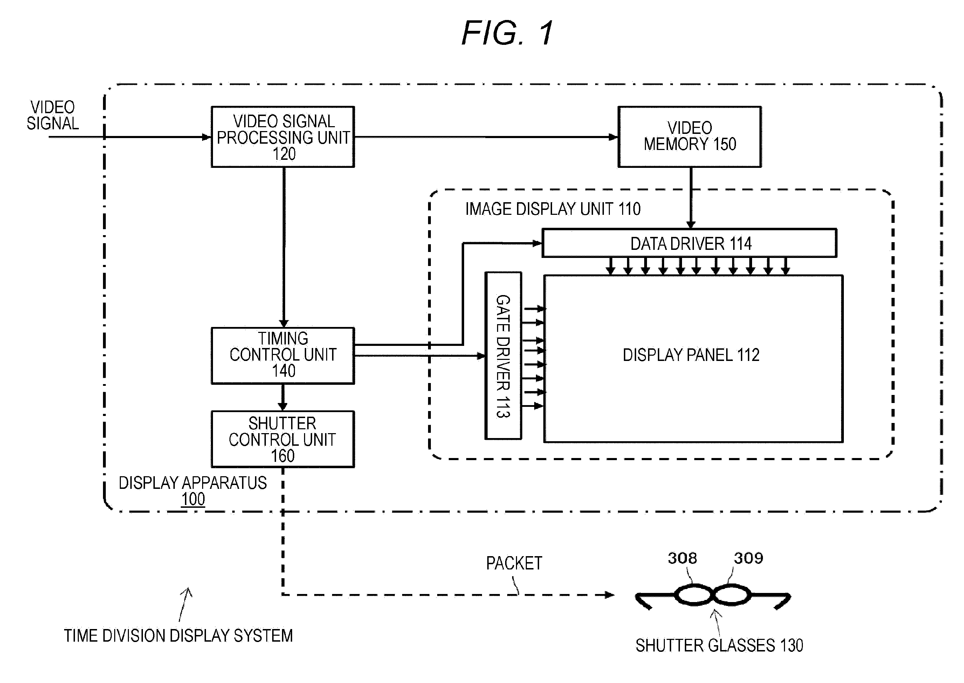

Fig. 1 is a figure illustrating a configuration example of a time-divisional display system including a display apparatus 100 and shutter glasses 130 capable of displaying a plurality of parallax images in a time-divisional manner. In the explanation below, left-eye images and right-eye images for three-dimensional display will be used as examples of a plurality of parallax images.

A display apparatus 100 includes an image display unit 110, a video signal processing unit 120, a timing control unit 140, a video memory 150, and a shutter control unit 160. In addition, the image display unit 110 includes a display panel 112, a gate driver 113, and a data driver 114.

When the video signal processing unit 120 receives transmission of video signal from the outside of the video signal processing unit 120, the video signal processing unit 120 executes various kinds of signal processing so that it becomes suitable for display of a stereoscopic image with the image display unit 110, and outputs the result to the video memory 150. In this case, examples of "outside" which is the source of transmission of the video signal include a digital broadcast receiver and a content reproduction apparatus such as Blu-ray disk player.

In the present embodiment, the video signal processing unit 120 performs interpolation processing for generating an interpolated image in terms of time in order to suppress apparent change of parallax caused by time-divisional display of a parallax image captured or generated with the same timing during motion picture display, and the details of this feature will be explained later.

The video signal processing unit 120 provides a predetermined control signal to the timing control unit 140 so that the data driver 113 and gate driver 114 operate in synchronization with timing of switching of video signal of stereoscopic images.

The gate driver 113 is a driving circuit for generating a signal for successive driving, and outputs a driving voltage to a gate bus line connected to each pixel in the display panel 112 in accordance with the signal transmitted from the timing control unit 140. The data driver 114 is a driving circuit for outputting a driving voltage based on the video signal, and generates and outputs a signal, which is to be applied to a data line, on the basis of the video signal which is read from the video memory 150 and the signal transmitted from the timing control unit 140.

For example, the display panel 112 includes a plurality of pixels arranged in a lattice form, but the gist of the technique disclosed in this specification is not limited to any particular pixel arrangement. In a case of a liquid crystal display panel, liquid crystal molecules having a predetermined orientation state are sealed between transparent plates such as glasses, and an image is displayed in response to application of an external signal. As described above, the signal is applied to the display panel 112 via the gate driver 113 and the data driver 114.

The shutter control unit 160 controls opening/closing operation of the shutter mechanism of the shutter glasses 130 in synchronization with the switching of display of the left-eye image L and the right-eye image R on the display unit 112. The shutter control unit 160 includes a communication unit (not shown) operating as an access point in a wireless network such as Wi-Fi and IEEE802.15.4, and accommodates one or more shutter glasses 13 operating as terminal stations in a Basic Service Set (BSS) provided therein. The shutter control unit 160 transmits, to the shutter glasses 13 from the communication unit, a packet including necessary information for controlling the timing of opening/closing of the right and left shutters 308, 309.

During the display period of the left-eye image L on the display panel 112, the shutter glasses 130 open the left-eye shutter lens 308, and close the right-eye shutter lens 309 in accordance with a packet wirelessly transmitted from the display apparatus 11, and the display light based on the left-eye image L reaches only the left eye of the user. During the display period of the right-eye image R on the display panel 112, the shutter glasses 130 open the right-eye shutter lens 309, and close the left-eye shutter lens 308, and the display light based on the right-eye image R reaches only the right eye of the user.

When a plurality of parallax images captured or generated with the same timing are time-divisionally displayed with the display apparatus 100, apparent parallax may change depending on the direction in which the parallax object moves and the speed at which it moves as illustrated in Figs. 11B and 12B during motion picture display. Accordingly, in the present embodiment, when a plurality of image streams of input signals to the video signal processing unit 120 are captured or generated with the same timing, interpolation processing for generating an interpolated image in terms of time is performed on at least one of the plurality of image streams, and the change of the apparent parallax is suppressed. More specifically, interpolation processing in terms of time is performed, so that a time difference of a time at which interpolation images of a plurality of image streams are generated is the same as a time difference of operation for separating the corresponding parallax images (for example, a time difference of opening/closing operation of the right and left shutter lenses 308, 309 of the shutter glasses 130).

In the explanation below, the time-divisional display system as illustrated in Fig. 1 will be explained, in which, for example, left-eye image L and right-eye image R with parallax is time-divisionally displayed, and images are selected in synchronization with the switching of display with the shutter mechanisms of the shutter glasses 130, and how an interpolated image in terms of time is generated will be explained.

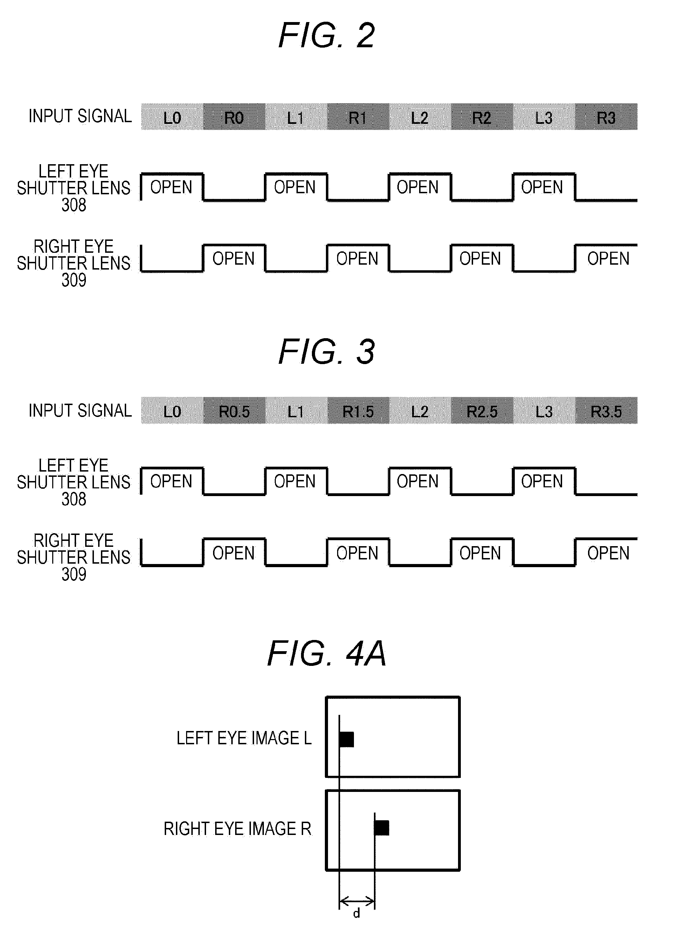

Fig. 2 illustrates an original parallax image before generation of an interpolated image in terms of time and opening/closing operation of a left-eye shutter lens 308 and a right-eye shutter lens 309.

When signals L0R0-L1R1-L2R2-... of left-eye images and right-eye images are input, they are sorted and displayed on the display panel 112 into the order L0-R0-L1-R1-L2-R2-... as illustrated in the figures. The signals L0R0, L1R1, L2R2, ... of the left-eye images and the right-eye images received are captured or generated with the same timing.

On the other hand, during the display period of the left-eye image L on the display panel 112, the shutter glasses 130 open the left-eye shutter lens 308, and close the right-eye shutter lens 309 in accordance with a packet wirelessly transmitted from the display apparatus 11, and the display light based on the left-eye image L reaches only the left eye of the user. During the display period of the right-eye image R on the display panel 112, the shutter glasses 130 open the right-eye shutter lens 309, and close the left-eye shutter lens 308, and the display light based on the right-eye image R reaches only the right eye of the user.

However, apparent parallax may change depending on the direction in which the parallax object moves and the speed at which it moves as illustrated in Figs. 11B and 12B during motion picture display. When the left-eye image stream L is displayed before the right-eye image stream R (L0-R0-L1-R1-...), the observer feels as follows: in a motion picture in which an object moves from the left to the right of the screen, the observer feels that the object is closer than actually it is. On the contrary, in a motion picture in which an object moves from the right to the left of the screen, the observer feels that the object is farther than actually it is. When the right-eye image stream R is displayed before the left-eye image stream L (R0-L0-R1-L1-...), the result is the opposite thereto.

Accordingly, interpolation processing is performed on the right-eye image R to generate an interpolated image in terms of time, and this suppresses change of the apparent parallax.

Fig. 3 illustrates generation of an interpolated image in terms of time for a right-eye image among a left-eye image and the right-eye image captured or generated with the same timing.

When signals L0R0-L1R1-L2R2- of the left-eye image and the right-eye image are input, interpolation images R0.5, R1.5, R2.5, ... which are delayed in terms of time by 05 frame with respect to right-eye images R0, R1, R2, ... of each frame cycle are successively generated. As illustrated in the figure, they are sorted into L0-R0.5-L1-R1.5-L2-R2.5-... and displayed on the display panel 112.

In this case, the time difference for generating the interpolation images R0.5, R1.5, R2.5, ... for the right-eye images is 0.5 frame, but this is the same as the time difference for opening/closing operation of the right and left shutter lenses 308, 309 of the shutter glasses 130. Thus, the observer wearing the shutter glasses 130 can correctly see the amount of parallax.

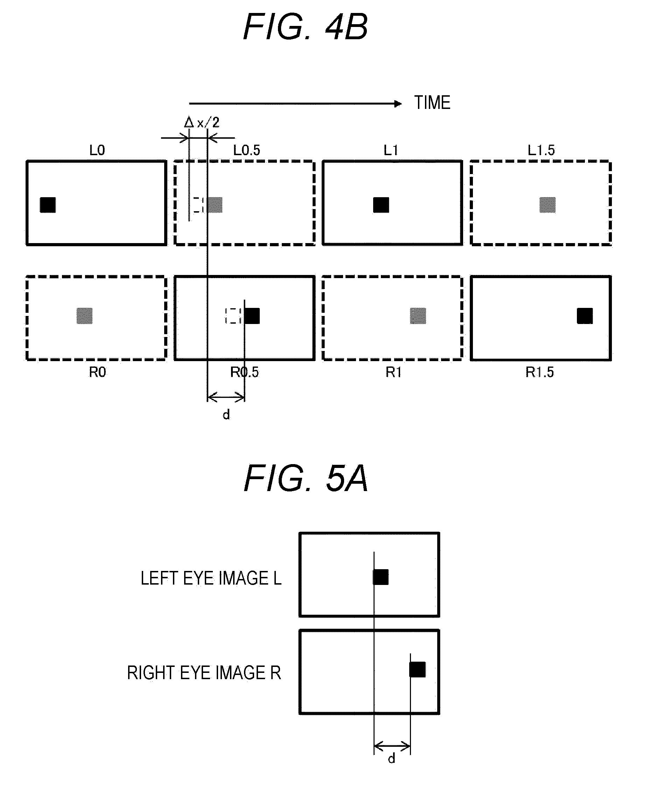

For example, as illustrated in Fig. 4A, the following case will be considered: interpolated images in terms of time is generated for the right-eye images in a motion picture in which an object having a parallax of d pixels between a left-eye image L and a right-eye image R moves from the left to the right of the screen with a speed of Δx pixel per frame cycle. Fig. 4B illustrates an example of generation of an interpolated image in terms of time for a right-eye image among a left-eye image and the right-eye image captured or generated with the same timing.

As described above, R0 is seen with a delay of 0.5 frame with respect to L0, and R1 is seen with a delay of 0.5 frame with respect to L1. Between L0 and L1, the object moves by Δx pixels to the right. In contrast, an interpolated image in terms of time R0.5 equivalent to a time difference for opening/closing operation of the shutter lenses 308, 309 is displayed as a right-eye image with a delay of 0.5 frame with respect to L0. The observer thinks that the object in a left-eye image frame L0.5 moves by Δx/2 to the right as illustrated by gray color. On the other hand, an object in the interpolated image in terms of time R0.5 also moves to the right by Δx/2 with respect to the original position of the object in the left-eye image R0. The parallax is maintained as d pixels with respect to the left-eye image L0.5 which is imagined in the brain of the observer. Therefore, even in the motion picture, the apparent parallax does not change.

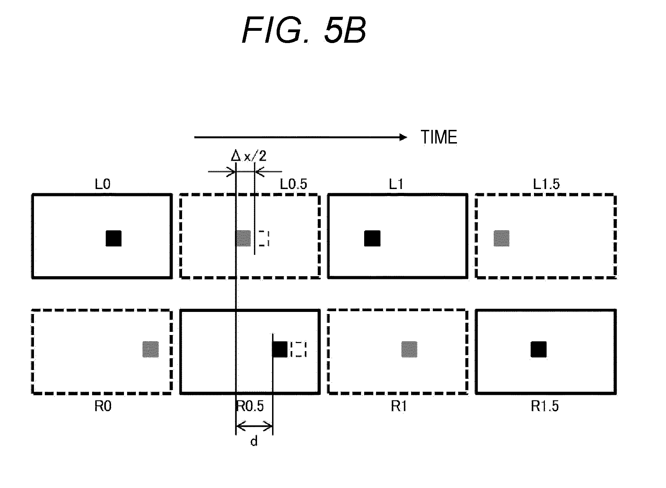

For example, as illustrated in Fig. 5A, the following case will be considered: interpolated images in terms of time is generated for the right-eye images in a motion picture in which an object having a parallax of d pixels between a left-eye image L and a right-eye image R moves from the right to the left of the screen with a speed of Δx pixel per frame cycle. Fig. 5B illustrates an example of generation of an interpolated image in terms of time for a right-eye image among a left-eye image and the right-eye image captured or generated with the same timing.

As described above, R0 is seen with a delay of 0.5 frame with respect to L0, and R1 is seen with a delay of 0.5 frame with respect to L1. Between L0 and L1, the object moves by Δx/2 pixels to the left. In contrast, an interpolated image in terms of time R0.5 equivalent to a time difference for opening/closing operation of the shutter lenses 308, 309 is displayed as a right-eye image with a delay of 0.5 frame with respect to L0. The observer thinks that the object in a left-eye image frame L0.5 moves by Δx/2 to the left as illustrated by gray color. On the other hand, an object in the interpolated image in terms of time R0.5 also moves to the left by Δx/2 with respect to the original position of the object in the left-eye image R0. The parallax is maintained as d pixels with respect to the left-eye image L0.5 which is imagined in the brain of the observer. Therefore, likewise, the apparent parallax does not change in the case where the object moves from the right to the left.

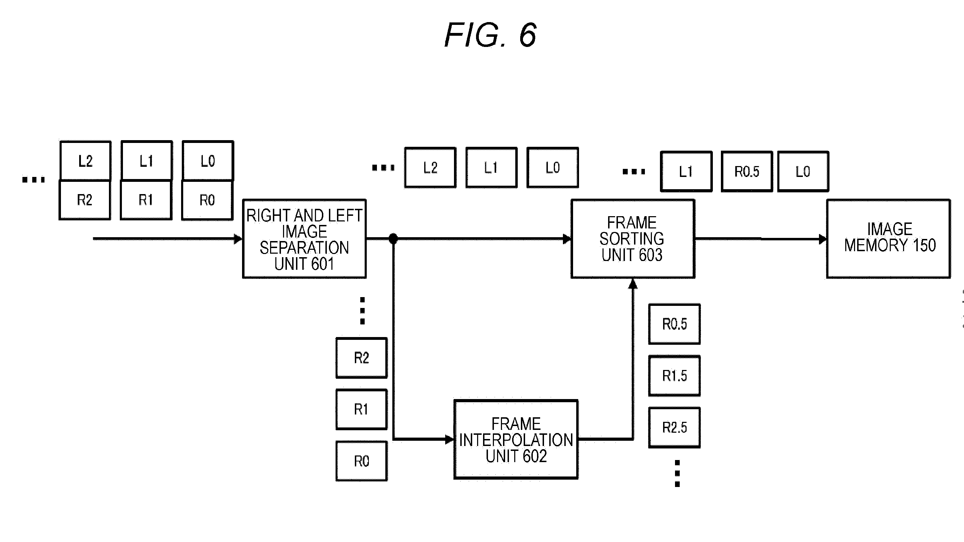

Fig. 6 illustrates a functional block diagram in the video signal processing unit 120 for generating an interpolated image in terms of time for a right-eye image as illustrated in Figs. 4B and 5B.

When the signals L0R0-L1R1-L2R2-... of the left-eye images and the right-eye images are input, the right and left image separating unit 601 separate them into the left-eye images L0, L1, L2, ... and the right-eye images R0, R1, R2, .... Among them the right-eye images R0, R1, R2, ... are input into the frame interpolation unit 602. The frame interpolation unit 602 generates, in order, the interpolation images R0.5, R1.5, R2.5, ... which are delayed in terms of time by 0.5 frame with respect to right-eye images R0, R1, R2, ... of each frame cycle. Then, when the frame sorting unit 603 receives the left-eye images L0, L1, L2, ... and the interpolated images in terms of time R0.5, R1.5, R2.5, ..., they are sorted into L0-R0.5-L1-R1.5-L2-R2.5-..., and are written to the image memory 150 in order.

In the example as illustrated in Figs. 3 to 5, an interpolated image in terms of time is generated for only the right-eye images among the stereoscopic motion picture including the left-eye images and the right-eye images. When the interpolation image is generated, processing is performed on the basis of information about two original images before and after the image in question (for example, R0.5 is generated from R0 and R1, and R1.5 is generated from R1 and R2).

In this case, when an interpolated image in terms of time is closer to the original image in terms of time, then more accurate interpolation can be achieved, and in addition, the processing time will be shorter. More specifically, there would be less failure. For example, when an interpolated image in terms of time is generated from the original images R1 and R2, less failure would occur in generation o R1.25 or R1.75 rather than generation of R1.5.

Accordingly, instead of generating an interpolated image in terms of time for only the right-eye image among the left-eye image and the right-eye image captured or generated with the same timing, a method for generating interpolated images in terms of time for both of the left-eye image and the right-eye image so as to make each interpolation image closer to the original image in terms of time may be considered in order to reduce overall failure.

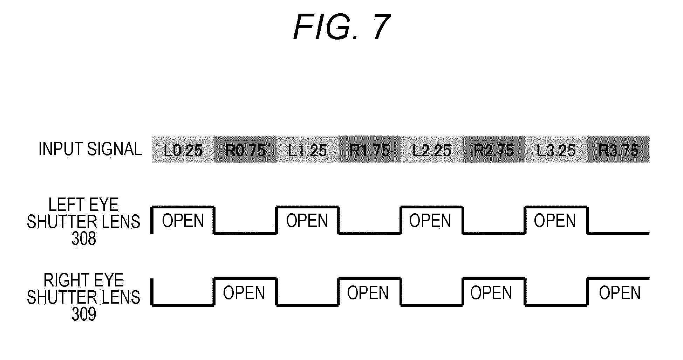

Fig. 7 illustrates generation of interpolated image in terms of time for both of a right-eye image and a left-eye image among the left-eye image and the right-eye image captured or generated with the same timing.

When signals L0R0-L1R1-L2R2-... of the left-eye image and the right-eye image are input, interpolation images L0.25, L1.25, L2.25, ... delayed in terms of time by 0.25 frame with respect to the left-eye images L0, L1, L2, L3, ... of each frame cycle are generated in order, and interpolation images R0.75, R1.75, R2.75, ... delayed in terms of time by 0.75 frame with respect to the right-eye images R0, R1, R2, R3, ... of each frame cycle are generated in order. Then, as illustrated in the figure, they are sorted into L0.25-R0.75-L1.25-R1.75-L2.25-R2.75-... and displayed on the display panel 112.

In this case, a time difference between a time when the interpolation images L0.25, L1.25, L2.25, ... of the left-eye images are generated and a time when the interpolation images R0.75, R175, R2.75, ... of the right-eye images are generated is 0.5 frame, but this is equivalent to the time difference of opening/closing operation of the right and left shutter lenses 308, 309 of the shutter glasses 130. Thus, the observer wearing the shutter glasses 130 can correctly see the amount of parallax.

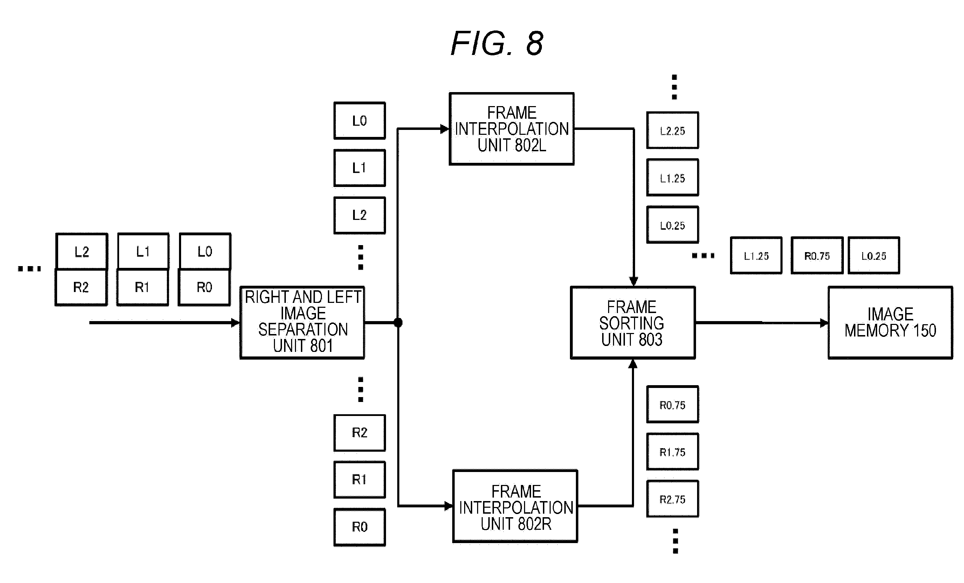

Fig. 8 illustrates a functional block diagram in a video signal processing unit 120 for generating an interpolated image in terms of time for each of the left-eye image and the right-eye image.

When the signals L0R0-L1R1-L2R2-... of the left-eye images and the right-eye images are input, the right and left image separating unit 801 separate them into the left-eye images L0, L1, L2, ... and the right-eye images R0, R1, R2, .... Among them, the left-eye images L0, L1, L2, ... are input into a frame interpolation unit 802L, and the right-eye images R0, R1, R2, ... are input into a frame interpolation unit 802R. The frame interpolation unit 802L generates, in order, the interpolation images L0.25, L1.25, L2.25, ... which are delayed in terms of time by 0.25 frame with respect to right-eye images L0, L1, L2, ... of each frame cycle. The frame interpolation unit 802R generates, in order, the interpolation images R0.75, R1.75, R2.75, ... which are delayed in terms of time by 0.75 frame with respect to right-eye images R0, R1, R2, ... of each frame cycle. Then, when the frame sorting unit 803 receives the left-eye images L0.25, L1.25, L2.25, ... and the interpolated images in terms of time R0.75, R1.75, R275, ..., the frame sorting unit 803 sorts them into L0.25-R0.75-L1.25-R1.75-L2.25-R2.75-..., and write L0.25-R0.75-L1.25-R1.75-L2.25-R2.75-... to the image memory 150 in order.

When interpolated images in terms of time are generated for at least some of the images of a plurality of parallax images as illustrated in Figs. 3 and 7, a determination is made, on the basis of information given to the input signals, as to whether the image streams of the input signals are captured or generated with the same timing. Also, a determination is made, on the basis of information given to the input signals, as to for which time the interpolation images are generated from at least one of (or both of) image streams of the left-eye images and the right-eye images. When no such information is given to the input signals, the user may make selection.

The embodiment explained above is a measure which is used by a display apparatus for time-divisionally displaying a plurality of parallax images such as a monitor or a projector to prevent change of apparent parallax during motion picture display. Not only when the shutter mechanism of separating the left-eye image and the right-eye image is the shutter glasses as illustrated in Fig. 1 but also in any one of the cases where the shutter mechanism is a liquid crystal shutter provided on the display screen of the display panel 112 (more specifically, time-divisional naked-eye method) or the shutter mechanism includes a liquid crystal shutter and a phase difference film or a phase difference plate provided on the display screen of the display panel 112 and polarization glasses which an observer wears (more specifically, active retarder method), the technique disclosed in this specification can be a measure to prevent change of apparent parallax during motion picture display in the same manner.

Instead of a display apparatus such as a monitor or a projector, a video generation apparatus such as a game machine for generating a plurality of parallax images with the same timing and a reproduction apparatus such a BD player for reproducing a plurality of parallax images with the same timing may adopt the same measure as that described above. When the display apparatus connected to the video generation apparatus or the reproduction apparatus is a time-divisional display apparatus, a time difference of a time when the plurality of output image frames are captured or generated may be given so that it is the same as a time difference of opening/closing timing of the corresponding a plurality of shutter mechanisms.

In the case of the video generation apparatus, after a plurality of parallax images are generated, interpolation processing is performed to generate an interpolated image in terms of time for at least one of those parallax images, thus suppressing change of the apparent parallax. In the case of the reproduction apparatus, interpolation processing is performed to generate an interpolated image in terms of time for at least one of a plurality of parallax images reproduced from a recording medium such as a BD, thus suppressing change of the apparent parallax.

At this occasion, the video generation apparatus or the reproduction apparatus may determine whether the connected display apparatus is a time-divisional display apparatus or not on the basis of the signal given by the connected display apparatus or may allow the user to make selection. Then, the video generation apparatus or the reproduction apparatus generates interpolated images in terms of time for a plurality of image streams so as to attain the same time difference as that the operation for separating the parallax image which is performed by the connected display apparatus.

### INDUSTRIAL APPLICABILITY

The technique disclosed in this specification has been described hereinabove in detail with reference to the particular embodiment. However, it is obvious that a person skilled in the art could modify the embodiment and employ an alternative in the embodiment without deviating from the gist of the technique disclosed in this specification.

In this specification, the embodiment using the liquid crystal display as the display apparatus has been explained, but the gist of the technique disclosed in this specification is not limited to any particular display device.

The range the technique disclosed in this specification is applied is not limited to the stereoscopic image. The technique disclosed in this specification can be applied to various kinds of display apparatuses displaying a plurality of parallax images according to the time-divisional display method. Whether the method using the shutter glasses or the naked-eye method is not particularly limited.

In short, this technique has been disclosed as a form of example, and the content of the description of this specification should not be interpreted in a limiting manner. In order to determine the gist of the technique disclosed in this specification, claims should be taken into consideration.

### REFERENCE SIGNS LIST

100 three-dimensional display apparatus, 110 image display unit, 112 display panel, 113 gate driver, 114 data driver, 120 video signal processing unit, 130 shutter glasses, 140 timing control unit, 150 video memory, 160 shutter control unit, 308 left-eye shutter lens, 309 right-eye shutter lens

## Claims

1. An image processing apparatus comprising:
an interpolation processing unit that generates an interpolated image in terms of time for at least one image stream of a plurality of image streams; and
an output unit that outputs upon time-divisionally switching, into the order of image streams and the order of time, each image stream not subjected to the interpolation processing by the interpolation processing unit and each image stream having been subjected to the interpolation processing by the interpolation processing unit from among the plurality of image streams.

2. An image processing method comprising:
an interpolation processing step of generating an interpolated image in terms of time for at least one image stream of a plurality of image streams; and
an output step of outputting upon time-divisionally switching, into the order of image streams and the order of time, each image stream not subjected to the interpolation processing in the interpolation processing step and each image stream having been subjected to the interpolation processing in the interpolation processing step from among the plurality of image streams.

3. A display system comprising:
an interpolation processing unit that generates an interpolated image in terms of time for at least one image stream of a plurality of image streams of input signals, and a display unit that time-divisionally switches and outputs, into the order of image streams and the order of time, each image stream not subjected to the interpolation processing by the interpolation processing unit and each image stream having been subjected to the interpolation processing by the interpolation processing unit from among the plurality of image streams; and
a shutter control unit that controls opening/closing operation of a plurality of shutter mechanisms respectively corresponding to the image streams in synchronization with switching of display of the display unit.

4. The display system according to claim 3, wherein the interpolation processing unit inputs a plurality of image streams captured or generated with a same timing, and generates an interpolated image in terms of time so that a time difference of a time for generating the interpolation image of the image stream is the same as a time difference of opening/closing operation of the plurality of shutter mechanisms.

5. The display system according to claim 3, wherein a determination as to for which time the interpolation processing unit generates an interpolation image for which of a plurality of image streams is made on the basis of information attached to the input signal or on the basis of selection made by a user.

6. The display system according to claim 3, wherein the plurality of image streams are a left-eye image stream and a right-eye image stream having parallax with respect to each other.

7. The display system according to claim 6, wherein the plurality of shutter mechanisms are shutter glasses which have a left-eye shutter and a right-eye shutter and which is worn by an observer.

8. The display system according to claim 6, wherein the plurality of shutter mechanisms are liquid crystal shutters which are provided on a display screen of the display unit and which respectively correspond to parallax image.

9. The display system according to claim 6, wherein the plurality of shutter mechanisms include a liquid crystal shutter and a phase difference film or a phase difference plate provided on a display screen of the display unit, and polarization glasses worn by an observer.

10. A video generation apparatus for generating a plurality of image streams to generate an interpolated image in terms of time for at least one of the image streams.

11. The video generation apparatus according to claim 10, wherein a display apparatus for time-divisionally displaying a plurality of image streams is connected, and a method of the display apparatus is obtained.

12. The video generation apparatus according to claim 11, wherein an interpolated image in terms of time for at least one of a plurality of image streams is generated so as to attain the same time difference as a time difference of operation for separating a plurality of image streams which is performed by the display apparatus.

13. A reproduction apparatus for reproducing a plurality of image streams from a recording medium to generate an interpolated image in terms of time for at least one of the image streams.

14. The reproduction apparatus according to claim 13, wherein a display apparatus for time-divisionally displaying a plurality of image streams is connected, and a method of the display apparatus is obtained.

15. The reproduction apparatus according to claim 14, wherein an interpolated image in terms of time for at least one of a plurality of image streams is generated so as to attain the same time difference as a time difference of operation for separating a plurality of image streams which is performed by the display apparatus.
